Europäisches Patentamt

European Patent Office

Office européen des brevets

(11) Veröffentlichungsnummer: **0 241 677**
**B1**

(12) **EUROPÄISCHE PATENTSCHRIFT**

(45) Veröffentlichungstag der Patentschrift:
02.05.90

(51) Int. Cl.⁴: **F16F 9/46**

(21) Anmeldenummer: **87102515.1**

(22) Anmeldetag: **23.02.87**

(54) Stossdämpfer mit veränderbarer Dämpfungscharakteristik.

(30) Priorität: 12.04.86 DE 3612397
30.08.86 DE 3629644

(43) Veröffentlichungstag der Anmeldung:
21.10.87 Patentblatt 87/43

(45) Bekanntmachung des Hinweises auf die Patenterteilung:
02.05.90 Patentblatt 90/18

(84) Benannte Vertragsstaaten:
AT BE CH DE FR GB IT LI NL SE

(56) Entgegenhaltungen:
EP-A- 0 157 181
EP-A- 0 161 872
WO-A-85/04698
DE-C- 3 346 352
FR-A- 1 130 621
FR-A- 2 552 515
GB-A- 2 159 234
GB-A- 2 164 723

(73) Patentinhaber: KÖRBER AG,
Kampchaussee 8-32 Postfach 80 04 60,
D-2050 Hamburg 80(DE)

(72) Erfinder: Komossa, Werner, Hellholzstieg 3,
D-2050 Börnsen(DE)
Erfinder: Brand, Peter, Münterweg 14,
D-2000 Hamburg 74(DE)

ACTORUM AG

## Beschreibung

Die Erfindung betrifft einen Stoßdämpfer mit veränderbarer Dämpfungscharakteristik, insbesondere für Kraftfahrzeuge, der mindestens einen mit einem Dämpfungsmedium gefüllten Zylinder und eine Kolbenstange aufweist, die abgedichtet in den Zylinder eintaucht und die an ihrem zylinderseitigen Ende einen gegen die Zylinderwand abgedichteten Kolben trägt, der den Zylinderraum in zwei Kammern aufteilt, wobei der Kolben neben mindestens einem Hauptstromkanal für das Dämpfungsmedium als By-Passe zwischen den Kammern wirkende steuerbare Verbindungskanäle aufweist, die von einem im Kolben angeordneten elektrischen Steuersystem steuerbar sind.

Bekannte Stoßdämpfer mit einstellbarer Dämpfungscharakteristik weisen im Kolben Verbindungskanäle für das Dämpfungsmedium, insbesondere Öl, auf, die durch einen elektrisch steuerbaren Schieber mehr oder weniger geöffnet oder geschlossen werden können. Ein derartiger Stoßdämpfer ist in der FR-PS 1 130 621 beschrieben.

Durch die EP-A 0 157 181 ist ein Stoßdämpfer mit variabler Dämpfungscharakteristik der eingangs genannten Gattung bekannt geworden, bei dem ein im Stoßdämpferinneren angeordneter Verstellmotor mittels eines drehbaren Ventils radiale Bypass-Kanäle unterschiedlicher Größe wahlweise freigibt oder schliesst. Je nach der Größe des gerade freigegebenen Bypass-Kanals variiert der Grad der zusätzlichen Dämpfung. Infolge der Einbeziehung eines Verstellmotors in das Stoßdämpferinnere und der radialen Anordnung der Bypass-Kanäle ist der Platzbedarf für die Steuerung der Bypass-Kanäle beträchtlich. Da die Bypass-Kanäle nicht unabhängig voneinander d.h. auch gleichzeitig freigebbar oder verschließbar sind, ist die Verstellzeit groß.

In der GB-A 2 159 234 wird zwar ein Stoßdämpfer mit unabhängig voneinander freigebbaren und verschließbaren Bypass-Kanälen gezeigt, doch sind die zugehörigen Steueranordnungen außerhalb des Stoßdämpfers angebracht, wo sie beim Einbau, z.B. in ein Kraftfahrzeug, stören können. Außerdem ist die Lage der Steueranordnung für die einzelnen Kanäle so gewählt, daß sie weit auseinander liegen und im Winkel zueinander angeordnet sind, wodurch sich der Platzbedarf noch erhöht.

Die der Erfindung zugrundeliegende Aufgabe besteht in einem betriebssicheren Stoßdämpfer, dessen By-Pass-Querschnitt schnell verstellt und sicher konstant gehalten werden kann und dessen Steuerelemente zum Verstellen des By-Pass-Querschnitts konstruktiv vorteilhaft in dem Stoßdämpfer, nämlich in seinem Kolben, angeordnet werden können.

Dies erfordert eine besonders kleine Bauform für die zum Verschließen und Öffnen der Verbindungskanäle erforderlichen Steuerelemente. Eine Zusatzaufgabe besteht darin, die Freigabe- und Schließelemente besonders massearm auszubilden, um geringe Schaltzeiten und elektrische Erregerleistungen zu erreichen.

Die Lösung gemäß der Erfindung besteht darin, daß der Kolben mehrere räumlich nebeneinander angeordnete Verbindungskanäle aufweist, die mittels sich in Richtung der Verbindungskanäle erstreckender, jeweils Erregerspule und Anker aufweisender, ebenfalls nebeneinander angeordneter elektrischer Steueranordnungen unabhängig voneinander freigebbar oder verschließbar sind.

Eine räumlich sehr vorteilhafte Verteilung der Verbindungskanäle im Kolben besteht nach einer Weiterbildung der Erfindung darin, daß die Verbindungskanäle konzentrisch um die Kolbenachse und symmetrisch zueinander angeordnet sind.

Bei Stoßdämpfern mit veränderbarer Dämpfungscharakteristik besteht das Erfordernis, daß diese Dämpfungscharakteristik leicht an die besonderen Verhältnisse des Anwenders, z. B. an die Besonderheiten eines Kraftfahrzeuges, angepaßt werden muß. Eine Lösung dieser Aufgabe, der selbständiger erfinderischer Rang zukommt, besteht darin, daß die Verbindungskanäle jeweils einen Bemessungsteil und einen Schaltteil aufweisen. Der Schaltteil kann dann unabhängig von dem Bemessungsteil auf kürzeste Schaltzeiten und/oder kleine Leistungsaufnahme in einem elektrischen Antriebssystem (z. B. Erregerspulen) ausgelegt werden, wobei lediglich darauf zu achten ist, daß die maximale Durchflußmenge erreicht wird. Der Bemessungsteil kann bei dieser besonders vorteilhaften Weiterbildung der Erfindung schnell an die Besonderheiten des Anwendungsfalles angepaßt werden, ohne daß der Schaltteil und damit die Schaltzeiten und/oder Schaltleistungen beeinflußt werden muß.

Zum Freigeben der Verbindungskanäle eignen sich in an sich bekannter Weise den Verbindungskanälen zugeordnete elektrisch erregbare Spulen, die bei Erregung jeweils einen Anker in Freigabeposition für das Dämpfungsmedium bewegen. Zum Überführen des als Verschlußelement dienenden Ankers in die Schließposition können ebenfalls elektrisch erregbare Spulen verwendet werden. Die Schließbewegung kann aber auch von Federn übernommen werden, die jeweils einen Anker in Schließposition für das Dämpfungsmedium bewegen.

Zur Lösung der Aufgabe, die steuerbaren Freigabe- und Schließelemente konstruktiv vorteilhaft in dem Stoßdämpfer anzuordnen, trägt eine Weiterbildung der Erfindung bei, gemäß der die Spulen bezüglich der Kolbenachsen ebenfalls nebeneinander angeordnet sind. Ein Anker kann eine Steuerkante zum Freigeben und Verschließen mindestens eines stationären Strömungskanals und einen sich daran anschließenden symmetrischen Strömungsraum aufweisen. Der symmetrische Strömungsraum verhindert die Ausbildung einseitiger Kräfte auf den Anker.

Die nebeneinander angeordneten Spulen werden vorteilhaft konzentrisch um die Kolbenachse und symmetrisch zueinander angeordnet.

In einem Stoßdämpfer gemäß der Erfindung kann mindestens ein Hauptströmungskanal für das in einer Richtung strömende Dämpfungsmedium und mindestens ein weiterer Hauptströmungskanal für das in der anderen Richtung strömende Dämpfungsmedium vorgesehen sein. Dabei lassen sich vorteilhaft für beide Richtungen jeweils mehrere Hauptstromkanäle vorsehen, von denen zwei das Dämpfungsmedium jeweils in unterschiedlichen Richtungen leitende Hauptströmungskanäle nebeneinander angeordnet sind.Räumlich vorteilhaft sind Paare von das Dämpfungsmedium jeweils in unterschiedlichen Richtungen leitenden Hauptstromkanälen, die konzentrisch um die Kolbenachse und symmetrisch zueinander angeordnet sind.

Im Strömungsweg des Dämpfungsmediums durch die Hauptstromkanäle können Überdruckventile angeordnet sein, von denen das Überdruckventil in dem Strömungsweg des bei Druckbelastung des Stoßdämpfers strömenden Dämpfungsmediums bei einem kleineren Druck öffnen kann als das Überdruckventil in dem Strömungsweg des bei Zugbelastung strömenden Dämpfungsmediums. Der Stoßdämpfer arbeitet bei dieser vorteilhaften Anordnung der Überdruckventile in erwünschter Weise bei Druckbelastung "weicher" als bei Zugbelastung.

Anstatt Anker mit Steuerkanten vorzusehen, können die Anker zum Verschließen und Freigeben der Verbindungskanäle auch als Nadeln ausgebildet werden, die noch geringere Massen aufweisen und damit noch geringere Schaltzeiten und/oder Erregerleistungen zulassen.

Eine konstruktiv vorteilhafte Variante der Erfindung bezüglich der Anordnung der Verbindungskanäle besteht darin, daß die Spulen bezüglich der Kolbenachse hintereinander angeordnet sind, wobei vorzugsweise die Spulenachsen und Kolbenachse übereinstimmen.

Eine weitere Variante der Erfindung besteht darin, daß die Achsen der Spulen quer, vorzugsweise rechtwinklig, zur Kolbenachse angeordnet sind.

Der mit der Erfindung verbundene Vorteil besteht vor allem darin, daß die zusätzlichen Verbindungskanäle, die diesen zugeordneten Steuerelemente und die Hauptstromkanäle in einer sehr gedrängten Bauweise auf dem kleinen im Innern eines Stoßdämpfers zur Verfügung stehenden Raum untergebracht werden können.

Zusätzlich kann die Dämpfungscharakteristik leicht an die Besonderheiten der jeweiligen Anwendung angepaßt werden, weil Änderungen des Bemessungsteils sich praktisch nicht auf den Schaltteil mit seinen minimierten Schaltzeiten und/oder Erregerleistungen auswirken. Schließlich ist mit der besonderen Anordnung und Ausbildung der Überdruckventile eine gute Anpassung an den gewünschten Kennlinienverlauf eines Stoßdämpfers möglich.

Die Erfindung wird anhand von Ausführungsbeispielen näher erläutert.

Es zeigen:

Figur 1 einen Stoßdämpfer der Erfindung in einer perspektivisch dargestellten aufgeschnittenen Explosionszeichnung mit drei konzentrisch und parallel zur Kolbenachse und symmetrisch zueinander angeordneten Verbindungskanälen,

Figur 2 ein Detail der Figur 1 in vergrößertem Maßstab, senkrecht von unten gesehen,

Figur 3 einen Stoßdämpfer der Erfindung in einer perspektivisch dargestellten aufgeschnittenen Explosionszeichnung mit zwei übereinander angeordneten Spulenkörpern und

Figur 4 einen Stoßdämpfer der Erfindung in einer perspektivisch dargestellten aufgeschnittenen Explosionszeichnung mit zwei nebeneinander angeordneten Spulenkörpern, deren Achsen rechtwinklig zur Kolbenachse verlaufen.

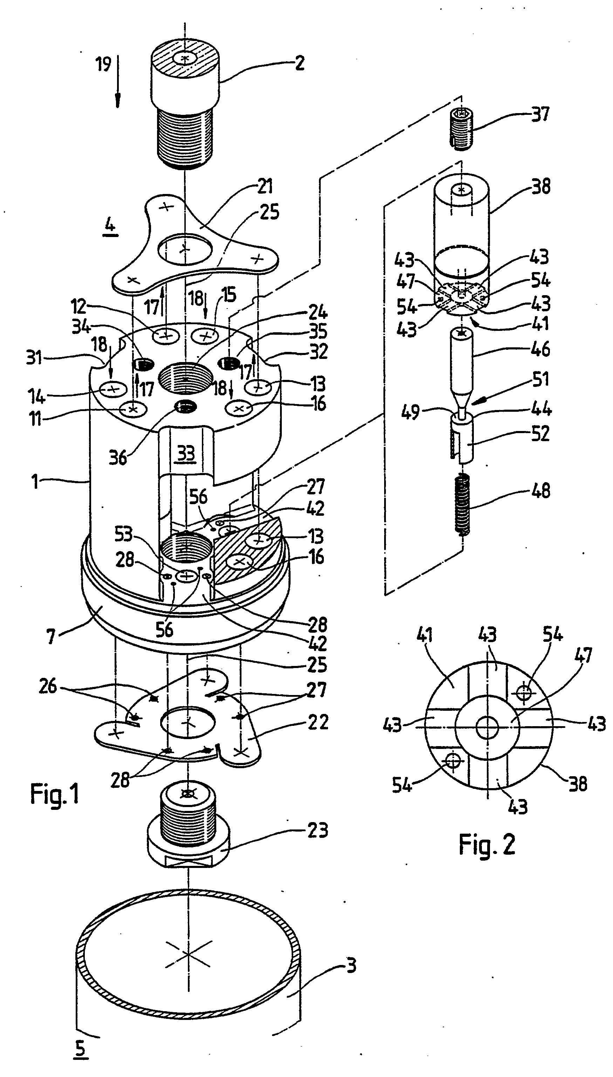

Der Stoßdämpfer der Figuren 1 und 2 weist einen Kolben 1 auf, der an einer abgebrochen dargestellten Kolbenstange 2 befestigt ist und in einem Zylinder 3 zwei mit Dämpfungsmedium, z. B. Öl, gefüllte Kammern 4 und 5 voneinander trennt. Mit 7 ist eine Ringdichtung des Kolbens 1 bezeichnet. Weitere Einzelheiten des Stoßdämpfers sind an sich bekannt und z. B. der DE-PS 33 46 352 zu entnehmen. Der Kolben 1 weist drei Paare von Hauptstromkanälen 11 ... 16 auf, von denen die Hauptstromkanäle 11 ... 13 das Öl in Richtung des Pfeils 17 bei Druckbelastung des Stoßdämpfers (Bewegung der Kolbenstange 2 entsprechend Pfeil 19 relativ zum Zylinder 3), die Hauptstromkanäle 14 ... 16 bei Zugbelastung (Strömungsrichtung des Öls entsprechend Pfeil 18 bei entgegengesetzter Bewegung der Kolbenstange) leiten. Im Strömungsweg des Öls durch die Hauptstromkanäle liegen Überdruckventile 21, 22, von denen das Überdruckventil 21 das Öl bei Druckbelastung des Stoßdämpfers, das Überdruckventil 22 bei Zugbelastung im Hauptstrom freigibt. Die Überdruckventile 21, 22 sind so bemessen, daß das Überdruckventil 21 den Hauptölstrom früher freigibt als das Überdruckventil 22, der Stoßdämpfer bei Druckbelastung mithin "weicher" dämpft als bei Zugbelastung. 23 ist eine Schraube zum Befestigen des Überdruckventils 22. Die Kolbenstange 2 trägt an ihrem Ende ein Gewinde, mit dem sie in eine mit einem Gewinde versehene Bohrung 24 des Kolbens 1 einschraubbar ist. Die Anordnung der Hauptstromkanäle im Kolben 1 erfolgt paarweise konzentrisch zu der Kolbenachse 25 und symmetrisch zueinander.

Die zusätzlichen Verbindungskanäle 26, 27 und 28 gemäß der Erfindung sind jeweils durch zugeordnete elektrisch gesteuerte Steuerelemente freigebbar oder verschließbar. Sie stellen damit Parallelkanäle, sogenannte By-Passe, zu den Hauptströmungskanälen dar, durch die wegen ihrer steuerbaren Freigabe oder Schließung die Dämpfungscharakteristik des Stoßdämpfers gesteuert werden kann. Die Steuerelemente weisen elektrisch erregbare Spulen auf, die hinter Ausnehmungen 31 ... 33 des Kolbens 1 angeordnet und mittels in Gewindebohrungen 34 ... 36 eingeschraubte Schrauben gehalten werden. Von den Spulen ist eine mit ihrer Befestigungsschraube 37 dargestellt und mit 38 bezeichnet.

Die Spulen weisen an ihren Unterseiten 41, mit denen sie auf einer Fläche 42 des Kolbens 1 ruhen, jeweils kreuzförmige Fließnuten 43 für Öl auf, das durch jeweils eine Steuerkante 44 eines Ankers 46 der Spule 38 freigebbar oder sperrbar ist. Die Steuerkante 44 des Ankers 46 wird bei Erregung der zugehörigen Spule 38 aus einer Schließposition in einer Bohrung 47 zwischen den Fließnuten 43 gegen die Wirkung einer Druckfeder 48 herausgedrückt in eine Freigabeposition, in der Öl durch die Fließnuten 43 in zugehörige Verbindungskanäle (26 ... 28) im Kolben 1 und dem Überdruckventil 22 fließen kann. Das Ventil 22 ist so ausgelegt, daß sich lediglich die Flügel im Bereich der Hauptströmungskanäle 14 ... 16 verformen. Bei der Freigabe fließt Dämpfungsöl somit zusätzlich zu den Hauptströmungskanälen von Kammer 4 zu Kammer 5 oder in umgekehrter Richtung, wobei die Menge durch die Zahl der erregten Spulen steuerbar ist.

Zum Verschließen eines Verbindungskanals wird die zugehörige Spule 38 entregt, so daß die Druckfeder 48 den Anker 46 in seine Schließposition (in Bohrung 47) drückt, in der die Steuerkante 44 den Strömungsweg im By-Pass unterbricht. Die Endfläche 49 der Steuerkante 44 schließt in Freigabeposition etwa bündig mit der Fläche 42 des Kolbens 1 ab. An die Endfläche 49 schließt sich ein symmetrischer Strömungsraum 51 an, der als Einschnürung des Ankers 46 ausgebildet ist und für symmetrische Strömungsverhältnisse im By-Pass ohne resultierende Kraftwirkungen, die Unsymmetrien verursachen können, sorgt. Der die Druckfeder 48 umgebende Hülsenteil 52 des Ankers befindet sich mit der Druckfeder in einer Bohrung 53 in der Fläche 42. Der Hülsenteil 52, Anker 46 und Spule 38 sind hohl, um den Anker praktisch gegendrucklos verschieben zu können. Mit 54 sind Positionierstifte an den Unterseiten 41 der Spulen 38, mit 56 entsprechende Bohrungen in der Fläche 42 bezeichnet, durch die eine räumliche Fixierung der Spulen innerhalb des Kolbens 1 erleichtert wird. Die Spulen und Verbindungskanäle umgeben ebenso wie die Hauptstromkanäle die Kolbenachse 25 und sind symmetrisch zueinander angeordnet.

Durch die Anordnung wird eine sehr gedrängte Bauweise, die wegen der geringen Abmessungen von Stoßdämpfern für zusätzliche Steuerelemente sehr wichtig ist, ermöglicht. Ein zusätzlicher Vorteil der Erfindung besteht darin, daß die Schaltteile (Pos. 43, 44) der Verbindungskanäle von den Bemessungsteilen, die durch Bohrungen in dem Überdruckventil 22 gebildet werden, getrennt sind, so daß eine leichte Anpassung an unterschiedliche Dämpfungscharakteristiken möglich ist, z. B. durch einfaches Austauschen von kalibrierten Blenden in dem Überdruckventil 22, das dann vorteilhaft als Ganzes ausgetauscht wird. Die Steuerung der Dämpfungscharakteristik erfolgt durch Erregen einer oder mehrerer Spulen 38, wodurch ein oder mehrere Verbindungskanäle freigegeben werden. Die Verbindungskanäle können unterschiedliche Querschnitte aufweisen, die z. B. dualgestuft sind, wobei sich Querschnitte wie 1 : 2 : 4 verhalten können. Je mehr zusätzliche Verbindungskanäle geöffnet werden, um so "weicher" dämpft der Stoßdämpfer. Sind alle zusätzlichen Verbindungskanäle geschlossen, hat der Stoßdämpfer seine "härteste" Charakteristik.

Eine Variante der Erfindung betrifft die Ausbildung des Ankers 46 zum Freigeben und Verschließen der Verbindungskanäle. Diese Anker können auch zwecks Erreichung kleiner Massen als Nadeln ausgebildet sein, die von elektrisch erregbaren Spulen aus entsprechenden Bohrungen heraus in eine Freigabeposition und, z. B. von Druckfedern, wieder in diese hinein (Schließposition) bewegbar sein.

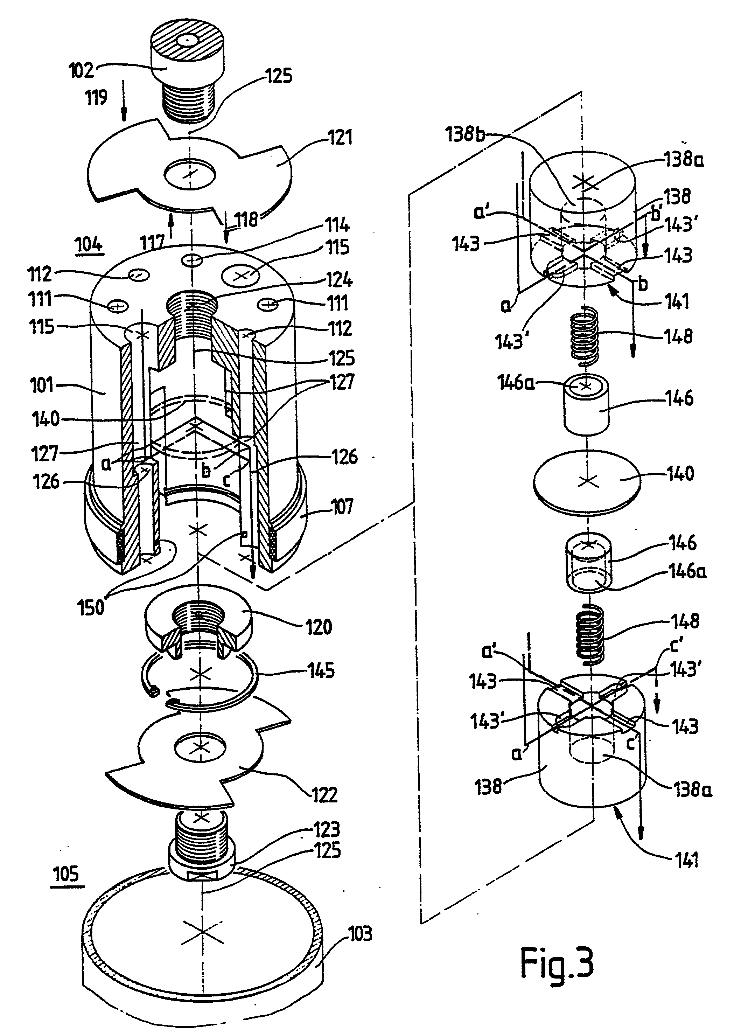

Figur 3 zeigt ein Ausführungsbeispiel der Erfindung, bei dem die Spulen übereinander, und zwar in der Kolbenachse angeordnet sind, was bautechnische Vorteile bietet. Der Stoßdämpfer weist einen Zylinder 103 auf, in dem ein von einer Kolbenstange 102 hin- und herbewegbarer Kolben 101 mit Ringdichtung 107 zwei Kammern 104, 105 voneinander trennt. Mit 111 und 112 sind Hauptstromkanäle für das Dämpfungsmedium, z. B. bezeichnet, das in Richtung des Pfeils 117 bei Druckbelastung des Stoßdämpfers (Bewegung der Kolbenstange 102 entsprechend Pfeil 119 relativ zum Zylinder 103) strömt. Mit 114 und 115 sind Hauptstromkanäle für das Öl bezeichnet, das in Richtung des Pfeils 118 bei entgegengesetzter Bewegung der Kolbenstange strömt. Im Strömungsweg des Öls durch die Hauptstromkanäle liegen z. B. als Tellerfeder ausgebildete Überdruckventile 121, 122, von denen das Überdruckventil 121 das Öl bei Druckbelastung des Stoßdämpfers, das Überdruckventil 122 bei Zugbelastung im Hauptstrom freigibt. Daher überdeckt das Überdruckventil 121 die Kanäle 111, 112, das Überdruckventil 122 die Kanäle 114, 115. Die Überdruckventile 121, 122 sind so bemessen, daß das Überdruckventil 121 den Hauptölstrom früher freigibt als das Überdruckventil 122, der Stoßdämpfer bei Druckbelastung mithin "weicher" dämpft als bei Zugbelastung. 123 ist eine Schraube zum Befestigen des Überdruckventils 122 in einer mit einem Innengewinde versehenen Ring 120. Die Kolbenstange 102 trägt an ihrem Ende ein Gewinde, mit dem sie in eine mit einem Gewinde versehene Bohrung 124 des Kolbens 101 einschraubbar ist.

Die zusätzlichen Verbindungskanäle 126 und 127 zweigen von den oben stets offenen Hauptstromkanälen 115 in deren oberem Teil ab und gelangen über freigebbare und verschließbare Querkanäle zu den ebenfalls stets offenen unteren Teilen der Hauptstromkanäle 112. Zum Freigeben und Schließen der Querkanäle und damit der Verbindungskanäle sind zwei elektrisch erregbare Spulen 138 vorgesehen, die hintereinander angeordnet sind und deren Achsen 138a mit der Kolbenachse 125 zusammenfallen. Die die Spulen 138 enthaltenden Spulenkörper weisen an ihren Unterseiten 141, mit denen sie sich auf einer Mittelplatte 140 abstützen, jeweils kreuzförmige Fließnuten 143 (Querkanäle) für Öl auf, die durch einen jeweils einer Spule zugeordneten in einer Bohrung 138b der Spule 138 zusammen mit einer Druckfeder 148 angordneten Anker 146 freigebbar oder sperrbar sind. Der Anker 146 wird bei Erregung der zugehörigen Spule 138 aus einer Sperrposition zwischen den Fließnuten 143 des Spulenkörpers gegen die Wirkung der Druckfeder 148, die sich in einer Bohrung 146a des Ankers 146 befindet, weiter in die Bohrung 138b der Spule in eine Freigabeposition hineingezogen, so daß Öl durch die Fließnuten 143 entlang der Wege a-b, a'-b' (obere Spule 138) und a-c, a'-c' (untere Spule 138) von den stets offenen oberen Teilen der Kanäle 115 in die stets offenen unteren Teile der Kanäle 112 strömen kann. Der Strömungsweg ist innerhalb des Kolbens 101 für die Wege a-b und a-c angedeutet. Ein Sicherungsring 145, der sich in der Nut 150 befindet, sichert die Spulen 138 gegen axiale Verschiebung. Die Fließnuten 143' sind mit kalibrierten Blenden ausgebildet.

Durch Erregen der oberen Erregerspule 138 kann somit ein bestimmter Ölfluß 127 aus den Hauptstromkanälen 115 abgezweigt und parallel geführt werden, so daß die Dämpfungscharakteristik des Stoßdämpfers weicher wird. Wird zusätzlich die untere Erregerspule 138 erregt, so kann ein zusätzlicher Ölstrom 126 abgezweigt und parallel geführt werden, so daß die Dämpfungscharakteristik noch weicher wird.

Sind die wirksamen Querschnitte der den einzelnen Spulen zugeordneten Fließnuten 143' unterschiedlich, so können entsprechend der gewählten Kombination der erregten Spulen entsprechende Dämpfungsstufen eingestellt werden.

Die Zuführungsleitungen für die elektrisch erregbaren Spulen 138 werden zweckmäßig durch den hohlen Innenraum der Kolbenstange 202 geführt.

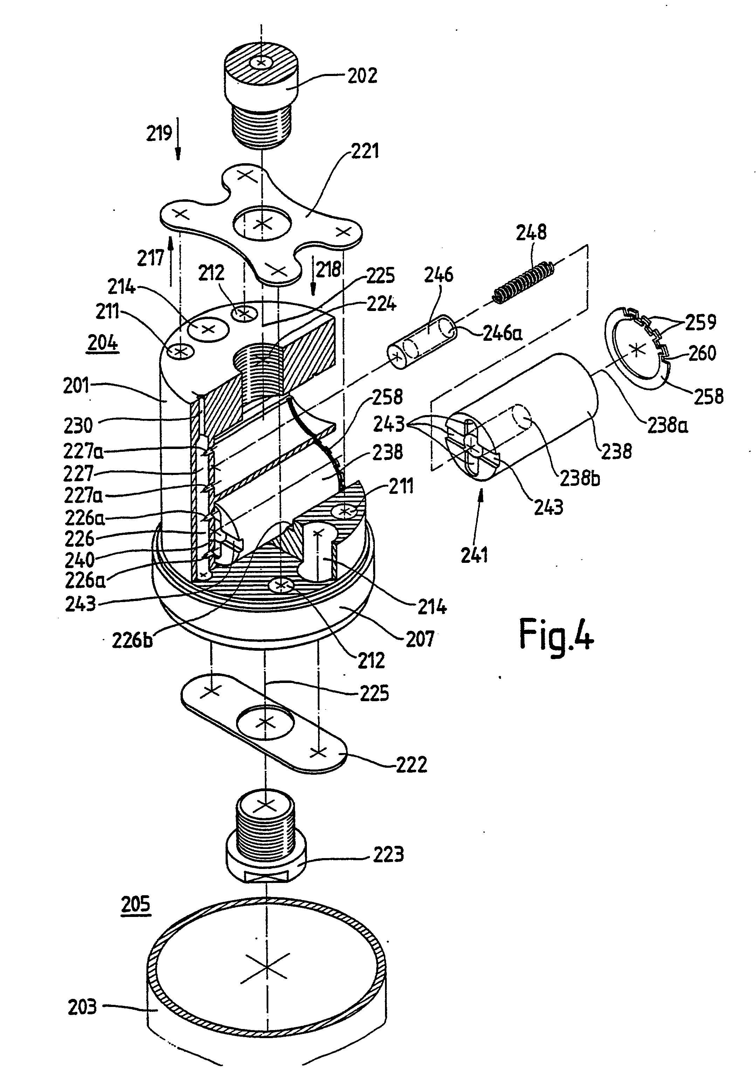

Figur 4 zeigt ein Ausführungsbeispiel der Erfindung, bei dem die Spulen übereinander angeordnet sind, wobei ihre Achsen quer, nämlich rechtwinklig, zur Kolbenachse angeordnet sind.

Der Stoßdämpfer weist einen Zylinder 203 auf, in dem ein von einer Kilbenstange 202 hin- und herbewegbarer Kolben 201 mit Ringdichtung 207 zwei Kammern 204, 205 voneinander trennt. Mit 211 und 212 sind Hauptstromkanäle für das Dämpfungsmedium, z. B. Öl, bezeichnet, das in Richtung des Pfeils 217 bei Druckbelastung des Stoßdämpfers (Bewegung der Kolbenstange 202 entsprechend Pfeil 219 relativ zum Zylinder 203) strömt. Mit 214 sind Hauptstromkanäle für das Öl bezeichnet, das in Richtung des Pfeils 218 bei entgegengesetzter Bewegung der Kolbenstange strömt. Im Strömungsweg des Öls durch die Hauptstromkanäle liegen z. B. als Tellerfedern ausgebildete Überdruckventile 221, 222, von denen das Überdruckventil 221 das Öl bei Druckbelastung des Stoßdämpfers, das Überdruckventil 222 bei Zugbelastung im Hauptstrom freigibt. Daher überdeckt das Überdruckventil 221 die Kanäle 211, 212, das Überdruckventil 222 die Kanäle 214. Die Überdruckventile 221, 222 sind so bemessen, daß das Überdruckventil 221 den Hauptölstrom früher freigibt als das Überdruckventil 222, der Stoßdämpfer bei Druckbelastung mithin "weicher" dämpft als bei Zugbelastung. 223 ist eine Schraube zum Befestigen des Überdruckventils 222. Die Kolbenstange 202 trägt an ihrem Ende ein Gewinde, mit dem sie in eine mit einem Gewinde versehene Bohrung 224 des Kolbens 201 einschraubbar ist.

Die zusätzlichen Verbindungskanäle 226a, 227a und 226b, 227b zweigen von einem parallel zur Kolbenachse 225 angeordneten Kanal 226, 227 ab, der zu dem Raum 205 hin offen ist und über eine sehr dünne Bohrung 230 mit dem Raum 204 in Verbindung steht, so daß sich eine sehr geringe Ölströmung zwischen den Räumen 204 und 205 ausbilden kann. Zum Freigeben und Schließen der Verbindungskanäle sind zwei elektrisch erregbare Spulen 238 vorgesehen, die übereinander angeordnet sind und deren Achsen 238a senkrecht zur Kolbenachse 225 verlaufen. Der Kolben kann auch mehr als zwei Spulen enthalten. Die die Spulen 238 enthaltenden Spulenkörper weisen auf den Stirnseiten 241, mit denen sie sich auf eine Wand 240 abstützen, jeweils kreuzförmige Fließnuten 143 für das Öl auf, die durch einen jeweils einer Spule zugeordneten in einer Bohrung 238b der Spule 238 zusammen mit einer Druckfeder 248 angeordneten Anker 246 freigebbar oder sperrbar sind. In der Wand 240 befinden sich kalibrierbare Kanäle 226a und 227a, durch die Öl von den Verbindungskanälen 226, 227 in die Fließnuten 143 gelangen kann. Ein Anker 246 einer Spule wird bei Erregen der Spule aus einer Sperrposition zwischen den Fließnuten 243 des Spulenkörpers gegen die Wirkung der in einer Bohrung 246b befindlichen Druckfeder 248 weiter in die Bohrung 238b der Spule in eine Freigabeposition gezogen, so daß Öl vom Raum 205 durch die Verbindungskanäle 226, 227 und durch die Kanäle 226a, 227a in weitere Fließnuten 226b, 227b (nicht sichtbar) und von da in den Raum 204 und umgekehrt gelangen kann. Mit 258 ist ein Federring bezeichnet, der eine Spule 238 gegen die Wand 240 drückt. Durch die Lücken 260 eines Zackenkranzes 259 kann das Öl aus den Fließnuten 226b, 227b in den Raum 204 gelangen.

Die elektrischen Leitungen zum Zuführen von Erregerstrom für die Spulen 238 können sich in dem hohlen Innenraum der Kolbenstange befinden.

Durch Erregen beispielsweise der unteren Erregerspule 238 kann somit ein bestimmter Ölfluß aus dem Verbindungskanal 226 abgezweigt und parallel zu den Hauptstromkanälen durch die Kanäle 226a und 226b zu dem Raum 204 gelangen, so daß die Dämpfungscharakteristik des Stoßdämpfers wegen des zusätzlichen Ölstromes weicher wird. Wird zusätzlich die obere Erregerspule 238 erregt, so kann ein zusätzlicher Ölstrom 227 abgezweigt und parallel zu den Hauptstromkanälen geführt werden, so daß die Dämpfungscharakteristik noch weicher wird. Je nach gewählter Kombination der erregten Spulen kann die Dämpfungscharakteristik somit schrittweise verstellt werden. Bei dualer Stufung der wirksamen Querschnitte der Kanäle 226a und 227a können fünf Stufen zwischen Sperrung und voller Öffnung des By-Passes eingestellt werden.

## Patentansprüche

1. Stoßdämpfer mit veränderbarer Dämpfungscharakteristik, insbesondere für Kraftfahrzeuge, der mindestens einen mit einem Dämpfungsmedium gefüllten Zylinder (3, 103, 203) und eine Kolbenstange (2, 102, 202) aufweist, die abgedichtet in den Zylinder eintaucht und die an ihrem zylinderseitigen Ende einen gegen die Zylinderwand abgedichteten Kolben (1, 101, 201) trägt, der den Zylinderraum in zwei Kammern (4, 104, 204; 5, 105, 205) aufteilt, wobei der Kolben neben mindestens einem Hauptstromkanal (11 ... 16) für das Dämpfungsmedium als By-Passe zwischen den Kammern wirkende steuerbare Verbindungskanäle aufweist, die von einem im Kolben angeordneten elektrischen Steuersystem steuerbar sind, dadurch gekennzeichnet, daß der Kolben (1, 101, 201) mehrere räumlich nebeneinander angeordnete Verbindungskanäle (26 ... 28); 126, 127; 226, 227) aufweist, die mittels sich in Richtung der Verbindungskanäle erstreckender, jeweils Erregerspule (38, 138, 238) und Anker (46, 146, 246) aufweisender, ebenfalls nebeneinander angeordneter elektrischer Steueranordnungen unabhängig voneinander freigebbar oder verschließbar sind.

2. Stoßdämpfer nach Anspruch 1, dadurch gekennzeichnet, daß die Verbindungskanäle (26 ... 28, 126, 127, 226, 227) parallel zueinander angeordnet sind.

3. Stoßdämpfer nach Anspruch 1 und/oder Anspruch 2, dadurch gekennzeichnet, daß die Verbindungskanäle (26 ... 28) konzentrisch um die Kolbenachse (25) und symmetrisch zueinander angeordnet sind.

4. Stoßdämpfer nach einem oder mehreren der vorhergehenden Ansprüche, dadurch gekennzeichnet, daß die Verbindungskanäle jeweils einen Bemessungsteil und einen Schaltteil (43, 143, 243; 44, 144, 244) aufweisen.

5. Stoßdämpfer nach einem oder mehreren der vorhergehenden Ansprüche, dadurch gekennzeichnet, daß zum Freigeben der Verbindungskanäle elektrisch erregbare Spulen (38, 138, 238) vorgesehen sind, die bei Erregung jeweils einen Anker (46, 146, 246) in Freigabeposition für das Dämpfungsmedium bewegen.

6. Stoßdämpfer nach Anspruch 5, dadurch gekennzeichnet, daß die Spulen (38, 138, 238) nebeneinander angeordnet sind.

7. Stoßdämpfer nach einem oder mehreren der Ansprüche 4 bis 6, dadurch gekennzeichnet, daß zum Verschließen der Verbindungskanäle Federn (48, 148, 248) vorgesehen sind, die jeweils einen Anker in Schließposition für das Dämpfungsmedium bewegen.

8. Stoßdämpfer nach einem oder mehreren der Ansprüche 4 bis 7, dadurch gekennzeichnet, daß die Spulen (38) konzentrisch um die Kolbenachse (25) und symmetrisch zueinander angeordnet sind.

9. Stoßdämpfer nach einem oder mehreren der vorhergehenden Ansprüche, dadurch gekennzeichnet, daß mindestens ein Hauptströmungskanal (11 ... 13, 111, 112, 211, 212) für das in einer Richtung (17, 117, 217) strömende Dämpfungsmedium und mindestens ein weiterer Hauptströmungskanal (14 ... 16, 114, 115, 214, 215) für das in der anderen Richtung (18, 118, 218) strömende Dämpfungsmedium vorgesehen ist.

10. Stoßdämpfer nach Anspruch 8, dadurch gekennzeichnet, daß für beide Richtungen jeweils mehrere Hauptströmungskanäle vorgesehen sind, von denen zwei das Dämpfungsmedium jeweils in unterschiedlichen Richtungen leitende Hauptstromkanäle nebeneinander angeordnet sind.

11. Stoßdämpfer nach Anspruch 9 und/oder 10, dadurch gekennzeichnet, daß Paare von das Dämpfungsmedium jeweils in unterschiedlichen Richtungen leitenden Hauptstromkanälen konzentrisch um die Kolbenachse und symmetrisch zueinander angeordnet sind.

12. Stoßdämpfer nach einem oder mehreren der vorhergehenden Ansprüche, dadurch gekennzeichnet, daß im Strömungsweg des Dämpfungsmediums durch die Hauptstromkanäle Überdruckventile (21, 22, 121, 122, 221, 222) angeordnet sind.

13. Stoßdämpfer nach Anspruch 12, dadurch gekennzeichnet, daß das Überdruckventil (21, 121, 221) in dem Strömungsweg des bei Druckbelastung des Stoßdämpfers strömenden Dämpfungsmediums bei einem kleineren Druck öffnet als das Überdruckventil (22, 122, 222) des bei Zugbelastung strömenden Dämpfungsmediums.

14. Stoßdämpfer nach einem oder mehreren der vorhergehenden Ansprüche, dadurch gekennzeichnet, daß die Anker zum Verschließen und Freigeben der Verbindungskanäle als Nadeln ausgebildet sind.

15. Stoßdämpfer nach einem oder mehreren der vorhergehenden Ansprüche 1, 2, 4 bis 7, 9 bis 14, dadurch gekennzeichnet, daß die Spulen (138) bezüglich der Kolbenachse (125) hintereinander angeordnet sind, wobei vorzugsweise die Spulenachsen (138a) und Kolbenachse übereinstimmen.

16. Stoßdämpfer nach einem oder mehreren der vorhergehenden Ansprüche 1, 2, 4 bis 7, 9 bis 14, dadurch gekennzeichnet, daß die Achsen (238a) der Spulen (238) quer, vorzugsweise rechtwinklig, zur Kolbenachse (225) angeordnet sind.

## Claims

1. Shock absorber with variable damping characteristic, in particular for motor vehicles, which has at least one cylinder (3, 103, 203) filled with a damping medium and a piston rod (2, 102, 202) which penetrates in sealed manner into the cylinder and which carries at its end towards the cylinder a piston (1, 101, 201) which is sealed with respect to the cylinder wall and divides the cylinder space into two chambers (4, 104, 204; 5, 105, 205), the piston having, besides at least one main flow channel (11 ... 16 ) for the damping medium controllable connecting channels which are controllable by an electrical control system arranged in the piston and which act as bypasses between the chambers, characterized in that the piston (1, 101, 201) has a plurality of spatially adjacent connecting channels (26 ... 28; 126, 127; 226, 227) which are mutually independently releasable or closable by means of similarly adjacently arranged electrical control means extending in the direction of the connecting channels and respectively having an exciting coil (38, 138, 238) and an armature (46, 146, 246).

2. Shock absorber according to claim 1, characterized in that the connecting channels (26 ... 28, 126, 127, 226, 227) are arranged parallel to one another.

3. Shock absorber according to claim 1 and/or claim 2, characterized in that the connecting channels (26 ... 28) are arranged concentrically about the piston axis (25) and symmetrically to one another.

4. Shock absorber according to one or more of the preceding claims, characterized in that the connecting channels have respectively a dimensioning part and switching (43, 143, 243; 44, 144, 244).

5. Shock absorber according to one or more of the preceding claims, characterized in that, to release the connecting channels, electrically excitable coils (38, 138, 238) are provided which on being excited respectively move an armature (46, 146, 246) into the release position for the damping medium.

6. Shock absorber according to claim 5, characterized in that the coils (38, 138, 238) are adjacent to one another.

7. Shock absorber according to one or more of claims 4 to 6, characterized in that, to close the connecting channels, springs (48, 148, 248) are provided which is respectively move an armature into the closed position for the damping medium.

8. Shock absorber according to one or more of claims 4 to 7, characterized in that the coils (38) are arranged concentrically about the piston axis (25) and symetrically to one another.

9. Shock absorber according to one or more of the preceding claims, characterized in that at least one main flow channel (11 ... 13, 111, 112, 211, 212) is provided for the damping medium flowing in one direction (17, 117, 217) and at least one further main flow channel (14 ... 16, 114, 115, 214, 215) is provided for the damping medium flowing in the other direction (18, 118, 218).

10. Shock absorber according to claim 8, characterized in that for both directions respectively a plurality of main flow channels are provided, whereof two main flow channels guiding the damping medium respectively in different directions are arranged adjacent to one another.

11. Shock absorber according to claim 9 and/or 10, characterized in that pairs of main flow channels guiding the damping medium respectively in different directions are arranged concentrically about the piston axis and symmetrically to one another.

12. Shock absorber according to one or more of the preceding claims, characterized in that pressure relief valves (21, 22, 121, 122, 221, 222) are arranged in the flow path of the damping medium through the main flow channels.

13. Shock absorber according to claim 12, characterized in that the pressure relief valve (21, 121, 221) in the flow path of the damping medium flowing during pressure loading of the shock absorber opens at a smaller pressure than the pressure relief valve (22, 122, 222) of the damping medium flowing during tensile loading.

14. Shock absorber according to one or more of the preceding claims, characterized in that the armatures for closing and releasing the connecting channels are constructed as needles.

15. Shock absorber according to one or more of the preceding claims 1, 2, 4 to 7, 9 to 14, characterized in that the coils (138) are arranged one behind the other with respect to the piston axis (125), with the coil axes (138a) and piston axis preferably coinciding.

16. Shock absorber according to one or more of the preceding claims 1, 2, 4 to 7, 9 to 14, characterized in that the axes (238a) of the coils (238) are arranged transversely, preferably at right angles, to the piston axis (225).

**Revendications**

1. Amortisseur présentant des caractéristiques d'amortissement modifiable, nottament pour véhicules automobiles, qui comporte au moins un cylindre (3, 103, 203) rempli d'un fluide d'amortissement et une tige de piston (2, 102, 202), laquelle plonge de façon étanche dans le cylindre et qui porte un piston (1, 101, 201) rendu étanche sur son extrémité côté cylindre vis-à-vis de la paroi de cylindre, qui divise le volume de cylindre en deux chambres (4, 104, 204; 5, 105, 205), le piston comportant en plus d'au moins un canal de courant principal (11 ... 16) pour le fluide d'amortissement, des canaux de liaison pouvant être commandés en tant que dérivations entre les chambres, lesquels peuvent être commandés grâce à un système de commande électrique agencé dans le piston, caractérisé en ce que le piston (1, 101, 201) comporte plusieurs canaux de liaison (26 ... 28; 126, 127; 226, 227), agencés de façon juxtaposée dans l'espace, pouvant être ouverts ou fermés indépendamment entre eux grâce à des dispositifs de commande électriques agencés également de façon juxtaposée, comportant respectivement une bobine d'excitation (38, 138, 238) et un induit (46, 146, 246) s'étendant dans la direction des canaux de liaison.

2. Amortisseur selon la revendication 1, caractérisé en ce que les canaux de liaison (26 ... 28, 126, 127, 226, 227) sont agencés de façon parallèle entre eux.

3. Amortisseur selon la revendication 1 et/ou la revendication 2, caractérisé en ce que les canaux de liaison (26 ... 28) sont agencés de façon concentrique respectivement à l'axe de piston (25) et symétriquement entre eux.

4. Amortisseur selon l'une ou plusieurs des revendications précédentes, caractérisé en ce que les canaux de liaison comportent respectivement une partie de mesure et une partie de commutation (43, 143, 243; 44, 144, 244).

5. Amortisseur selon l'une ou plusieurs des revendications précédentes, caractérisé en ce que pour l'ouverture des canaux de liaison sont prévues des bobines excitables électriquement (38, 138, 238) qui, lors de l'excitation, déplacent respectivement un induit (46, 146, 246) en position d'ouverture pour le fluide d'amortissement.

6. Amortisseur selon la revendication 5, caractérisé en ce que les bobines (38, 138, 238) sont juxtaposées.

7. Amortisseur selon l'une ou plusieurs des revendications 4 à 6, caractérisé en ce que des ressorts (48, 148, 248) sont prévus pour la fermeture des canaux de liaison, lesquels ressorts déplacent respectivement un induit en position de fermeture pour le fluide d'amortissement.

8. Amortisseur selon l'une ou plusieurs des revendications 4 à 7, caractérisé en ce que les bobines (38) sont agencées de façon concentrique respectivement à l'axe du piston (25) et symétriquement entre elles.

9. Amortisseur selon l'une ou plusieurs des revendications précédentes, caractérisé en ce qu'au moins un canal de passage principal (11 ... 13, 111, 112, 211, 212) est prévu pour le fluide d'amortissement s'écoulant dans une direction (17, 117, 217) et au moins un autre canal de passage principal (14 ... 16, 114, 115, 214, 215) est prévu pour le fluide d'amortissement s'écoulant dans l'autre direction (18, 118, 218).

10. Amortisseur selon la revendication 8, caractérisé en ce que pour les deux directions sont respectivement prévus plusieurs canaux de passage principal dont deux, à savoir les canaux de passage principal guidant le fluide d'amortissement respectivement dans des directions différentes, sont juxtaposés entre eux.

11. Amortisseur selon la revendication 9 et/ou 10, caractérisé en ce que des paires de canaux de passage principal guidant le fluide d'amortissement respectivement dans des directions différentes sont agencées de façon concentrique sur l'axe de piston et symétriquement entre eux.

12. Amortisseur selon l'une ou plusieurs des revendications précédentes, caractérisé en ce que dans le passage d'écoulement du fluide d'amortissement à travers les canaux de passage principal sont agencées des soupapes de surpression (21, 22, 121, 122, 221, 222).

13. Amortisseur selon la revendication 12, caractérisé en ce que la soupape de surpression (21, 121, 221) dans la voie d'écoulement du fluide d'amortissement s'écoulant lors d'un effort de compression de l'amortisseur, s'ouvre sous l'effet d'une pression plus faible que la soupape de surpression (22, 122, 222) du fluide d'amortissement s'écoulant sous l'effet d'un effort de traction.

14. Amortisseur selon l'une ou plusieurs des revendications précédentes, caractérisé en ce que les induits destinés à la fermeture et à l'ouverture des canaux de liaison sont réalisés sous forme d'aiguilles.

15. Amortisseur selon l'une ou plusieurs des revendications précédentes 1, 2, 4 à 7, 9 à 14, caractérisé en ce que les bobines (138) sont agencées successivement par rapport à l'axe de piston (125), les axes de bobines (138a) et l'axe de piston étant de préférence en coïncidence.

16. Amortisseur selon l'une ou plusieurs des revendications précédentes 1, 2, 4 à 7, 9 à 14, caractérisé en ce que les axes (238a) des bobines (238) sont agencés transversalement, de préférence à angle droit, par rapport à l'axe du piston (225).

Fig.1

Fig. 2

Fig.3

Fig.4